# EUROPÄISCHE PATENTANMELDUNG

(11) **EP 1 849 747 A2**
(43) Veröffentlichungstag der Anmeldung: **31.10.2007**
(21) Anmeldenummer: 07005178.4
(22) Anmeldetag: 13.03.2007
(51) Int. Cl.: C01B 3/34

(54) **Verfahren zur Produktion von Exportdampf in Dampfreformen**

(30) Priorität: 25.04.2006 DE 10619100
(71) Anmelder: Linde Aktiengesellschaft, 65189 Wiesbaden (DE)
(72) Erfinder: Freitag, Christian, 80538 München (DE); Henes, Dino, 81479 München (DE); Innocenzi, Stefano, 80637 München (DE); Klein, Harald, Dr., 82515 Wolfratshausen (DE); Schwarzhuber, Josef, 85283 Wolnzach (DE)
(74) Vertreter: Zahn, Christoph

(57) **Zusammenfassung**

Die Erfindung betrifft ein Verfahren zur Erzeugung von Wasserdampf (Dampf) in Dampfreformierungsprozessen, bei dem zumindest ein erster (18) und ein zweiter (13) Dampfstrom erzeugt werden, wobei der erste Dampfstrom (Prozessdampf) (18) vollständig im Dampfreformierungsprozess eingesetzt wird, während der zweite Dampfstrom (Exportdampf) (13) extern genutzt wird. Der Exportdampf (13) wird ausschließlich durch Verdampfung von entgastem und entmineralisiertem Wasser (Reinwasser) (1) erzeugt.

## Beschreibung

Die Erfindung betrifft ein Verfahren zur Erzeugung von Wasserdampf (Dampf) in Dampfreformierungsprozessen, bei dem zumindest ein erster und ein zweiter Dampfstrom erzeugt werden, wobei der erste Dampfstrom (Prozessdampf) vollständig im Dampfreformierungsprozess eingesetzt wird, während der zweite Dampfstrom (Exportdampf) extern genutzt wird, sowie eine Vorrichtung zur Durchführung des Verfahrens.

In Dampfreformierungsprozessen werden Kohlenwasserstoffe enthaltende Einsätze, wie Erdgas, Leichtbenzin oder Naphtha, mit Wasserdampf vermischt und in Dampfreformern zu Synthesegas - einer Kohlenmonoxid (CO) und Wasserstoff (H₂) enthaltenden Gasmischung - umgesetzt. Aus dem Synthesegas werden durch Reinigung und Zerlegung in weiteren Prozessschritten Stoffe wie CO, H₂ oder Oxogas (eine definierte Mischung aus H₂ und CO) gewonnen und als Produkte abgegeben. Um die eingesetzten Kohlenwasserstoffe mit hohem Umwandlungsgrad umzusetzen, wird die Dampfreformierung in derartigen Prozessen gewöhnlich mit einem Wasserdampfüberschuss durchgeführt. Um das überschüssige Wasser zu entfernen, wird das auf diese Weise erzeugte Synthesegas bis unterhalb des Wasserdampftaupunktes abgekühlt, wodurch der Wasserdampf auskondensiert und ein sog. Prozesskondensat bildet, das zum überwiegenden Teil aus Wasser besteht und i.Allg. mit Verunreinigungen wie Methanol, Ammoniak, Kohlendioxid, Ameisensäure und Essigsäure beladen ist.

Nach dem Stand der Technik wird das Prozesskondensat mit entmineralisiertem Wasser, das dem Prozess gewöhnlich von außen zugeführt wird, gemischt. Das so gebildete Mischwasser wird anschließend entgast und gegen im Dampfreformierungsprozess abzukühlende oder abkühlbare Stoffströme verdampft. Nach Überhitzung des Dampfes gegen abkühlbare Abgase, wird ein Teil des Dampfes (Prozessdampf) prozessintern eingesetzt, während der verbleibende Rest (Exportdampf) nicht innerhalb des Dampfreformierungsprozesses, sondern in einem externen Prozess genutzt wird. Die Erzeugung von Exportdampf ermöglicht es, im Dampfreformierungsprozess nicht verwertbare Wärme zu nutzen und die Wirtschaftlichkeit des Dampfreformierungsprozesses zu steigern.

Oft sind die Ansprüche der Abnehmer an die Qualität des Exportdampfes so hoch, dass sie von einem auf die oben beschriebene Weise erzeugten Exportdampf nicht erfüllt werden können. So darf beispielsweise die elektrische Leitfähigkeit von Exportdampf, der in einer Kondensationsturbine genutzt werden soll, nicht größer als 0,2µS/cm sein, ein Wert, der aufgrund der im Prozesskondensat enthaltenen Verunreinigungen jedoch häufig überschritten wird. Um auch in solchen Fällen nicht auf die Produktion von Exportdampf verzichten zu müssen, existieren Verfahren, die vorsehen das Prozesskondensat zu reinigen, bevor es mit entmineralisiertem Wasser gemischt wird.

Zur Reinigung des Prozesskondensats sind Verfahren bekannt, in denen die unerwünschten Stoffe durch Strippung in Strippkolonnen abgetrennt werden. Als Strippgas werden hierbei Luft oder Kohlenwasserstoffe enthaltende Stoffströme (z. B. Erdgas) eingesetzt.

In anderen Verfahren wird das Prozesskondensat entspannt und anschließend mittels Niederdruck-Wasserdampf, Luft oder Stickstoff in einer Waschkolonne entgast. Die Verunreinigungen werden dabei zusammen mit dem Reinigungsmedium ins freie abgeführt. Um auch hohen Anforderungen an die Reinheit des erzeugten Dampfes genügen zu können, sehen diese Verfahren einen weiteren Reinigungsschritt durch Ionenaustausch in entsprechenden Reaktoren vor.

Um nach dem Stand der Technik in einem Dampfreformierungsprozess Exportdampf mit hoher Reinheit zu erzeugen, ist ein erheblicher apparativer (Stripperkolonnen, Ionenaustauscher) und damit auch finanzieller Aufwand nötig. Darüber hinaus verringert sich u. U. die Menge an Exportdampf, da die für die Reinigung benötigte Energie nicht mehr zurück gewonnen werden kann.

Aufgabe der vorliegenden Erfindung ist es daher, ein Verfahren der eingangs genannten Art sowie eine Vorrichtung zur Durchführung des Verfahrens anzugeben, das es erlaubt Exportdampf mit hoher Reinheit, aber ohne die Nachteile des Standes der Technik zu erzeugen.

Diese Aufgabe wird verfahrensseitig erfindungsgemäß dadurch gelöst, dass der Exportdampf ausschließlich durch Verdampfung von entgastem und entmineralisiertem Wasser (Reinwasser) erzeugt wird.

Der zur Erzeugung von Exportdampf bestimmte Anteil des Reinwassers sowie der für den Export bestimmte Anteil des Reindampfes, werden im Dampfreformierungsprozess nicht mit anderen Stoffströmen vermischt, insbesondere nicht mit Prozesskondensat oder Prozessdampf. Die Reinheit des Exportdampfes wird somit ausschließlich durch die Reinheit des Reinwassers bestimmt. Zweckmäßigerweise wird das Reinwasser aus Trinkwasser oder aus einem anderen, nur geringe Mengen an Verunreinigungen aufweisenden Wasser in Wasseraufbereitungsprozessen hergestellt, wie sie aus dem Stand der Technik hinlänglich bekannt sind.

Die Überhitzung des Exportdampfes und/oder die Verdampfung des Reinwassers erfolgt erfindungsgemäß durch indirekten Wärmetausch mit im Dampfreformierungsprozess abzukühlenden und/oder abkühlbaren Stoffströmen. Unter "abzukühlenden Stoffströmen" sind dabei solche Stoffströme zu verstehen, die im Dampfreformierungsprozess abgekühlt werden müssen, um die gewünschten Produkte zu erhalten. Ein Beispiel für einen solchen Stoffstrom ist ein Synthesegasstrom, der heiß aus einem Dampfreformer austritt und kalt in eine Zerlegungseinrichtung eingeleitet werden muss. Unter "abkühlbaren Stoffströmen" sind Stoffströme zu verstehen, die, z. B. aus Gründen einer besseren Energienutzung, abgekühlt werden können, deren Nichtabkühlung jedoch keinen Einfluss auf die Menge und die Qualität der herzustellenden Produkte hat. Ein Beispiel für einen derartigen Stoffstrom ist das heiße, aus einem Dampfreformer abströmende Abgas.

Eine Ausgestaltung des erfindungsgemäßen Verfahrens sieht vor, dass der Prozessdampf aus im Dampfreformierungsprozess anfallendem, überwiegend aus Wasser bestehendem Kondensat (Prozesskondensat) oder aus einer Mischung aus Prozesskondensat und Reinwasser erzeugt wird. Bevorzugt werden Prozesskondensat und Reinwasser gemischt, die dabei entstehende Flüssigkeitsmischung durch Erhitzung verdampft und der so erzeugte Dampfstrom - gegebenenfalls nach Überhitzung - als Prozessdampf weitergeführt. Eine andere bevorzugte Ausgestaltung des erfindungsgemäßen Verfahrens sieht vor, dass Prozesskondensat und Reinwasser getrennt in die Dampfphase überführt werden. Die so erzeugten Dampfströme werden anschließend zusammengeführt und - gegebenenfalls nach Überhitzung - als Prozessdampf weitergeleitet.

Die Überhitzung des Prozessdampfes und/oder die Verdampfung des Prozesskondensats oder einer Mischung aus Prozesskondensat und Reinwasser, erfolgt erfindungsgemäß durch indirekten Wärmetausch mit im Dampfreformierungsprozess abzukühlenden und/oder abkühlbaren Stoffströmen.

Die Erfindung betrifft ferner eine Vorrichtung zur Erzeugung von Wasserdampf (Dampf) in einer Dampfreformierungseinrichtung (Dampfreformer), in der zumindest ein erster und ein zweiter Dampfstrom erzeugt wird, wobei der erste Dampfstrom (Prozessdampf) vollständig innerhalb des Dampfreformers eingesetzt wird, während der zweite Dampfstrom (Exportdampf) extern genutzt wird.

Vorrichtungsseitig wird die gestellte Aufgabe erfindungsgemäß dadurch gelöst, dass der Dampfreformer mit einer Einrichtung zur Erzeugung von Exportdampf ausgestattet ist, welcher ausschließlich entgastes und entmineralisiertes Wasser (Reinwasser) zuführbar ist.

Eine bevorzugte Ausgestaltung der erfindungsgemäßen Vorrichtung sieht vor, dass die Einrichtung zur Erzeugung von Exportdampf Wärmetauscher umfasst, über welche abzukühlenden und/oder abkühlbaren Stoffströmen Wärme im indirekten Wärmetausch entziehbar und auf aus Reinwasser erzeugten Dampf und/oder auf Reinwasser übertragbar ist.

Eine weitere bevorzugte Ausgestaltung der erfindungsgemäßen Vorrichtung sieht vor, dass der Dampfreformer mit einer Einrichtung zur Erzeugung von Prozessdampf ausgestattet ist, welcher im Dampfreformierungsprozess anfallendes Kondensat (Prozesskondensat) oder einer Mischung aus Prozesskondensat und Reinwasser zuführbar ist.

Eine andere bevorzugte Ausgestaltung der erfindungsgemäßen Vorrichtung sieht vor, dass die Einrichtung zur Erzeugung von Prozessdampf Wärmetauscher umfasst, über welche abzukühlenden und/oder abkühlbaren Stoffströmen Wärme im indirekten Wärmetausch entziehbar und auf aus dem Prozesskondensat oder einer Mischung aus Prozesskondensat und Reinwasser erzeugten Dampf und/oder auf Prozesskondensat oder einer Mischung aus Prozesskondensat und Reinwasser übertragbar ist.

Mit der Erfindung ist es möglich, die in einem Dampfreformierungsprozess anfallende Abwärme auch dann durch die Erzeugung von Exportdampf auf wirtschaftliche Weise zu nutzen, wenn an die Reinheit des Exportdampfes höchste Anforderungen gestellt werden. Durch die vollständige Trennung von Prozess- und Reindampferzeugung, besteht keinerlei Gefahr, den Exportdampf durch den Eintrag unerwünschter Substanzen - beispielsweise aus dem Prozesskondensat - zu verunreinigen.

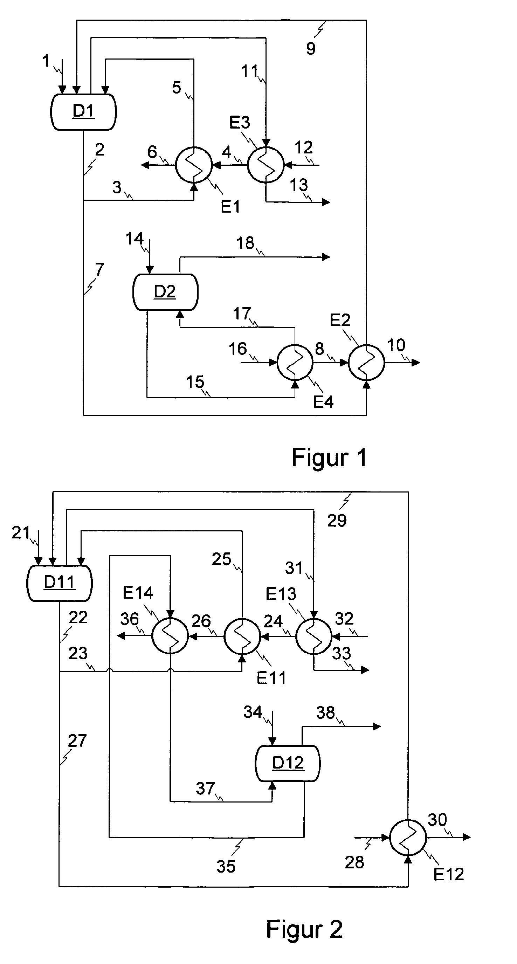

Im Folgenden soll die Erfindung anhand der in den Figuren 1 bis 3 schematisch dargestellten Ausführungsbeispiele naher erläutert werden. Bei den Ausführungsbeispielen handelt es sich um Ausschnitte aus Dampfreformierungsprozessen, in denen aus einem Kohlenwasserstoffe enthaltenden Einsatzstoffstrom in einem von außen beheizten Dampfreformer Synthesegas erzeugt und einer Zerlegungseinheit zur Herstellung von Produkten, wie z. B. Wasserstoff und Kohlenmonoxid, zugeführt wird.

In dem in Figur 1 gezeigten Ausführungsbeispiel wird entmineralisiertes und entgastes Importwasser über Leitung 1 in die Dampftrommel D1 eingeleitet und mit bereits darin befindlichem heißem Wasser gemischt. Über Leitung 2 wird Wasser aus der Dampftrommel D1 abgezogen und in zwei Teilströme aufgeteilt. Der erste Teilstrom wird über Leitung 3 dem Wärmetauscher E1 zugeführt, in welchem er dem über Leitung 4 aus dem Dampfreformer (nicht dargestellt) zugeführten Abgasstrom Wärme entzieht und dabei teilweise verdampft wird. Das so gebildete Flüssigkeits-Dampf-Gemisch wird über Leitung 5 zurück in die Dampftrommel D1 geführt, in der Flüssigkeit und Dampf getrennt werden, während der abgekühlte Abgasstrom über Leitung 6 in den Kamin (nicht dargestellt) geleitet wird. Der zweite Teilstrom wird über Leitung 7 dem Wärmetauscher E2 zugeführt, in welchem er dem abzukühlenden, über Leitung 8 zugeführten Synthesegasstrom Wärme entzieht und dabei teilweise verdampft wird. Das so gebildete Flüssigkeits-Dampf-Gemisch wird über Leitung 9 ebenfalls zurück in die Dampftrommel D1 geführt, in der Flüssigkeit und Dampf getrennt werden, während der abgekühlte Synthesegasstrom über Leitung 10 zur Zerlegungseinheit weitergeleitet wird. Der Dampf aus der Dampftrommel D1 wird über Leitung 11 abgezogen und dem im Abgasstrom vor dem Wärmetauscher E1 angeordneten Wärmetauscher E3 zugeführt, in dem er überhitzt wird und dabei dem über Leitung 12 einströmenden heißen Abgasstrom Wärme entzieht. Über Leitung 13 wird der überhitzte Dampf aus dem Wärmetauscher E3 abgezogen und als Reindampf weitergeführt.

Eine Mischung aus Prozesskondensat und Reinwasser, deren Reinheit prozessinternen Zwecken genügt, wird über Leitung 14 der Dampftrommel D2 zugeführt und mit bereits darin befindlichem Wasser gemischt. Über Leitung 15 wird Wasser aus der Dampftrommel D2 abgezogen und dem Wärmetauscher E4 zugeführt, in welchem er dem über Leitung 16 aus dem Dampfreformer zugeführten Synthesegasstrom Wärme entzieht und dabei teilweise verdampft wird. Das so gebildete Flüssigkeits-Dampf-Gemisch wird über Leitung 17 zurück in die Dampftrommel D2 geführt, in der Flüssigkeit und Dampf getrennt werden, während der abgekühlte Synthesegasstrom über Leitung 8 zum Wärmetauscher E2 weitergeleitet wird. Der Dampf aus der Dampftrommel D2 wird über Leitung 18 abgezogen und als Prozessdampf als Einsatz zum Dampfreformer weitergeführt.

In dem in Figur 2 gezeigten Ausführungsbeispiel wird entmineralisiertes und entgastes Reinwasser über Leitung 21 in die Dampftrommel D11 eingeleitet und mit bereits darin befindlichem Wasser gemischt. Über Leitung 22 wird Wasser aus der Dampftrommel D11 abgezogen und in zwei Teilströme aufgeteilt. Der erste Teilstrom wird über Leitung 23 dem Wärmetauscher E11 zugeführt, in welchem er dem über Leitung 24 zugeführten Abgasstrom Wärme entzieht und dabei teilweise verdampft wird. Das so gebildete Flüssigkeits-Dampf-Gemisch wird über Leitung 25 zurück in die Dampftrommel D11 geführt, in der Flüssigkeit und Dampf getrennt werden, während der abgekühlte Abgasstrom über Leitung 26 in den Wärmetauscher E14 geleitet wird. Der zweite Teilstrom wird über Leitung 27 dem Wärmetauscher E12 zugeführt, in welchem er dem abzukühlenden, über Leitung 28 aus dem Dampfreformer (nicht dargestellt) zugeführten Synthesegasstrom Wärme entzieht und dabei teilweise verdampft wird. Das so gebildete Flüssigkeits-Dampf-Gemisch wird über Leitung 29 zurück in die Dampftrommel D11 geführt, in der Flüssigkeit und Dampf getrennt werden, während der abgekühlte Synthesegasstrom über Leitung 30 zur Zerlegungseinheit weitergeleitet wird. Der Dampf aus der Dampftrommel D11 wird über Leitung 31 abgezogen und dem im Abgasstrom vor dem Wärmetauscher E11 angeordneten Wärmetauscher E13 zugeführt, in dem er überhitzt wird und dabei dem über Leitung 32 aus dem Dampfreformer (nicht dargestellt) zugeführten heißen Abgasstrom Wärme entzieht. Über Leitung 33 wird der überhitzte Dampf aus dem Wärmetauscher E13 abgezogen und als Reindampf weitergeführt.

Eine Mischung aus Prozesskondensat und Reinwasser, deren Reinheit prozessinternen Zwecken genügt, wird über Leitung 34 der Dampftrommel D12 zugeführt und mit bereits darin befindlichem Wasser gemischt. Über Leitung 35 wird Wasser aus der Dampftrommel D12 abgezogen und dem im Abgasstrom nach dem Wärmetauscher E11 angeordneten Wärmetauscher E14 zugeführt, in welchem er dem über Leitung 26 aus dem Wärmetauscher E11 zugeführten Abgasstrom Wärme entzieht und dabei teilweise verdampft wird. Das so gebildete Flüssigkeits-Dampf-Gemisch wird über Leitung 37 zurück in die Dampftrommel D12 geführt, in der Flüssigkeit und Dampf getrennt werden, während das abgekühlte Abgas über Leitung 36 in den Kamin (nicht dargestellt) weitergeleitet wird. Der Dampf aus der Dampftrommel D12 wird über Leitung 38 abgezogen und als Prozessdampf als Einsatz zum Dampfreformer (nicht dargestellt) weitergeführt.

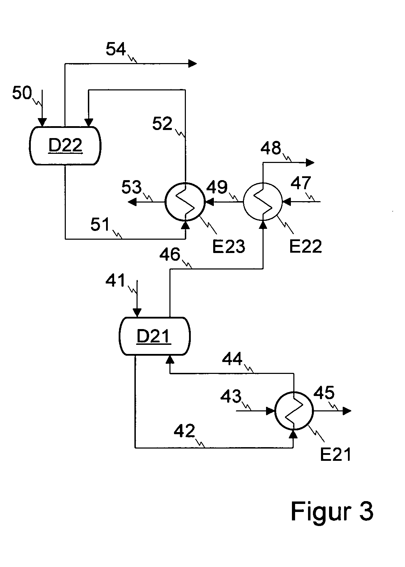

In dem in Figur 3 gezeigten Ausführungsbeispiel wird entmineralisiertes und entgastes Importwasser über Leitung 41 in die Dampftrommel D21 eingeleitet und mit bereits darin befindlichem Wasser gemischt. Über Leitung 42 wird Wasser aus der Dampftrommel D21 abgezogen und dem Wärmetauscher E21 zugeführt, in welchem er dem abzukühlenden, über Leitung 43 aus dem Dampfreformer (nicht dargestellt) zugeführten Synthesegasstrom Wärme entzieht und dabei teilweise verdampft wird. Das so gebildete Flüssigkeits-Dampf-Gemisch wird über Leitung 44 zurück in die Dampftrommel D21 geführt, in der Flüssigkeit und Dampf getrennt werden, während der abgekühlte Synthesegasstrom über Leitung 45 zur Zerlegungseinheit weitergeleitet wird. Der Dampf aus der Dampftrommel D21 wird über Leitung 46 abgezogen, dem im Abgasstrom des Dampfreformers (nicht dargestellt) angeordneten Wärmetauscher E22 zugeführt und dort überhitzt. Die für die Überhitzung notwendige Energie wird dem über Leitung 47 in den Wärmetauscher E22 einströmenden heißen Abgasstrom entzogen. Über Leitung 48 wird der überhitzte Dampf aus dem Wärmetauscher E22 abgezogen und als Reindampf weitergeführt.

Eine Mischung aus Prozesskondensat und Reinwasser, deren Reinheit prozessinternen Zwecken genügt, wird über Leitung 50 der Dampftrommel D22 zugeführt und mit bereits darin befindlichem Wasser gemischt. Über Leitung 51 wird Wasser aus der Dampftrommel D22 abgezogen und dem im Abgasstrom hinter dem Wärmetauscher E22 angeordneten Wärmetauscher E23 zugeführt, in welchem er dem über Leitung 49 zugeführten Abgasstrom Wärme entzieht und dabei teilweise verdampft wird. Das so gebildete Flüssigkeits-Dampf-Gemisch wird über Leitung 52 zurück in die Dampftrommel D22 geführt, in der Flüssigkeit und Dampf getrennt werden, während das abgekühlte Abgas über Leitung 53 in den Kamin (nicht dargestellt) geleitet wird. Der Dampf aus der Dampftrommel D22 wird über Leitung 54 abgezogen und als Prozessdampf als Einsatz zum Dampfreformer weitergeführt.

## Patentansprüche

1. Verfahren zur Erzeugung von Wasserdampf (Dampf) in Dampfreformierungsprozessen, bei dem zumindest ein erster und ein zweiter Dampfstrom erzeugt werden, wobei der erste Dampfstrom (Prozessdampf) vollständig im Dampfreformierungsprozess eingesetzt wird, während der zweite Dampfstrom (Exportdampf) extern genutzt wird, **dadurch gekennzeichnet, dass** der Exportdampf ausschließlich durch Verdampfung von entgastem und entmineralisiertem Wasser (Reinwasser) erzeugt wird.

2. Verfahren nach Anspruch 1, **dadurch gekennzeichnet, dass** der Prozessdampf aus im Dampfreformierungsprozess anfallendem, überwiegend aus Wasser bestehendem Kondensat (Prozesskondensat) oder aus einer Mischung aus Prozesskondensat und Reinwasser erzeugt wird.

3. Verfahren nach einem der Ansprüche 1 oder 2, **dadurch gekennzeichnet, dass** zur Erzeugung von Exportdampf Reinwasser im indirekten Wärmetausch gegen abzukühlende und/oder abkühlbare Stoffströme überhitzt und/oder verdampft wird.

4. Verfahren nach einem der Ansprüche 1 bis 3, **dadurch gekennzeichnet, dass** zur Erzeugung von Prozessdampf Prozesskondensat oder einer Mischung aus Prozesskondensat und Reinwasser im Wärmetausch gegen abzukühlende und/oder abkühlbare Stoffströme überhitzt und/oder verdampft wird.

5. Verfahren nach einem der Ansprüche 1 bis 4, **dadurch gekennzeichnet, dass** Reindampf im Wärmetausch gegen heiße Abgase überhitzt wird.

6. Vorrichtung zur Erzeugung von Wasserdampf (Dampf) in einer Dampfreformierungseinrichtung (Dampfreformer), in der zumindest ein erster und ein zweiter Dampfstrom erzeugt wird, wobei der erste Dampfstrom (Prozessdampf) vollständig innerhalb des Dampfreformers eingesetzt wird, während der zweite Dampfstrom (Exportdampf) extern genutzt wird, **dadurch gekennzeichnet, dass** der Dampfreformer mit einer Einrichtung zur Erzeugung von Exportdampf ausgestattet ist, welcher ausschließlich entgastes und entmineralisiertes Wasser (Reinwasser) zuführbar ist.

7. Vorrichtung nach Anspruch 6, **dadurch gekennzeichnet, dass** die Einrichtung zur Erzeugung von Exportdampf Wärmetauscher umfasst, über welche abzukühlenden und/oder abkühlbaren Stoffströmen Wärme im indirekten Wärmetausch entziehbar und auf aus Reinwasser erzeugten Dampf und/oder auf Reinwasser übertragbar ist.

8. Vorrichtung nach einem der Ansprüche 6 oder 7, **dadurch gekennzeichnet, dass** der Dampfreformer mit einer Einrichtung zur Erzeugung von Prozessdampf ausgestattet ist, welcher im Dampfreformierungsprozess anfallendes Kondensat (Prozesskondensat) oder einer Mischung aus Prozesskondensat und Reinwasser zuführbar ist.

9. Vorrichtung nach einem der Ansprüche 6 bis 8, **dadurch gekennzeichnet, dass** die Einrichtung zur Erzeugung von Prozessdampf Wärmetauscher umfasst, über welche abzukühlenden und/oder abkühlbaren Stoffströmen Wärme im indirekten Wärmetausch entziehbar und auf aus dem Prozesskondensat oder einer Mischung aus Prozesskondensat und Reinwasser erzeugten Dampf und/oder auf Prozesskondensat oder einer Mischung aus Prozesskondensat und Reinwasser übertragbar ist.
